(19) Europäisches Patentamt
European Patent Office
Office européen des brevets

(11) **EP 1 922 837 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **06792567.7**

(22) Anmeldetag: **26.07.2006**

(51) Int Cl.:
*H04L 9/30* (2006.01)     *G06F 7/72* (2006.01)

(86) Internationale Anmeldenummer:
**PCT/EP2006/064655**

(87) Internationale Veröffentlichungsnummer:
**WO 2007/028669 (15.03.2007 Gazette 2007/11)**

(54) **VERFAHREN ZUM SICHEREN VER- ODER ENTSCHLÜSSELN EINER NACHRICHT**

METHOD FOR SECURELY ENCRYPTING OR DECRYPTING A MESSAGE

PROCEDE DE CODAGE OU DECODAGE SECURISE D'UN MESSAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.09.2005 DE 102005042339**

(43) Veröffentlichungstag der Anmeldung:
**21.05.2008 Patentblatt 2008/21**

(73) Patentinhaber:
• **Siemens Aktiengesellschaft**
  **80333 München (DE)**
• **Kargl, Anton**
  **80639 München (DE)**

(72) Erfinder:
• **KARGL, Anton**
  **80639 München (DE)**
• **MEYER, Bernd**
  **81739 München (DE)**
• **BRAUN, Michael**
  **81825 München (DE)**

(56) Entgegenhaltungen:
• **CHEVALLIER-MAMES B: "Self-randomized exponentiation algorithms" LECTURE NOTES IN COMPUTER SCIENCE, SPRINGER VERLAG, NEW YORK, NY, US, Bd. 2964, 27. Februar 2004 (2004-02-27), Seiten 236-249, XP002297836 ISSN: 0302-9743**

• **PIERRE-ALAIN FOUQUE ET AL: "Defeating Countermeasures Based on Randomized BSD Representations" CRYPTOGRAPHIC HARDWARE AND EMBEDDED SYSTEMS - CHES 2004, 8. Juli 2004 (2004-07-08), Seiten 312-327, XP019009374 Cambridge, MA, USA**
• **ITOH K ET AL: "DPA COUNTERMEASURES BY IMPROVING THE WINDOW METHOD" CRYPTOGRAPHIC HARDWARE AND EMBEDDED SYSTEMS. INTERNATIONAL WORKSHOP, 13. August 2002 (2002-08-13), Seiten 303-317, XP001160529**
• **CHEVALLIER-MAMES B ET AL: "Low-Cost Solutions for Preventing Simple Side-Channel Analysis: SIde-Channel Atomicity" IEEE TRANSACTIONS ON COMPUTERS, IEEE SERVICE CENTER, LOS ALAMITOS, CA, US, Bd. 53, Nr. 6, Juni 2004 (2004-06), Seiten 760-768, XP002356344 ISSN: 0018-9340**
• **CHANGKYUN KIM ET AL: "A Secure and Practical CRT-Based RSA to Resist Side Channel Attacks" LNCS INTERNATIONAL CONFERENCE, ASSISI, 26. April 2004 (2004-04-26), Seiten 150-158, XP019006751**
• **Kouichi Itoh ET AL: "A Practical Countermeasure against Address-Bit Differential Power Analysis" In: "LECTURE NOTES IN COMPUTER SCIENCE", 1 January 2003 (2003-01-01), Springer Berlin Heidelberg, Berlin, Heidelberg, XP055155620, ISSN: 0302-9743 ISBN: 978-3-54-045234-8 vol. 2779, pages 382-396, DOI: 10.1007/978-3-540-45238-6_30,**

EP 1 922 837 B1

**Beschreibung**

Die Erfindung betrifft ein Verfahren zum sicheren Ver- oder Entschlüsseln einer Nachricht oder zum Erzeugen oder Verifizieren einer digitalen Signatur einer Nachricht, bei dem prozessorgestützt eine mathematische Operation mit einem Schlüssel auf die Nachricht angewendet wird, der als binäre Zahl mit einer Sequenz von Bits darstellbar ist.

Asymmetrische Kryptographiesysteme gewährleisten durch die Einrichtung von Schlüsselpaaren aus privatem und öffentlichem Schlüssel ein erhöhtes Maß an Sicherheit dahingehend, dass es für einen Angreifer nahezu unmöglich ist, in endlicher Zeit den privaten Schlüssel oder die mit öffentlichem Schlüssel verschlüsselte Nachricht zu entschlüsseln. Übliche Kryptographiesysteme wie etwa solche, die auf elliptischen Kurven beruhen, basieren auf einer Verschlüsselung, die in polynomieller Zeit durchführbar, jedoch nur in exporientieller Zeit relativ zur Länge der Schlüssel in Bits invertierbar ist. Bei auf elliptischen Kurven basierenden Systemen werden heute Schlüssellängen von n = 160 bis 192 Bits verwendet, bei den auf RSA-Algorithmen basierenden Systemen sind dazu Längen von n = 1024 bis 1536 Bits für ein etwa gleiches Sicherheitsniveau anzusetzen.

Eine Alternative zu den auf Invertierung der Verschlüsselung beruhenden Angriffsmethoden, die selbst auch Algorithmen umfassen, um möglichst effizient den der Verschlüsselung zugrunde liegenden Algorithmus zu brechen, stellen die so genannten Seitenkanalangriffe dar. Sie sind insbesondere bei mobilen Hilfsmitteln wie z.B. Smartcards oder Dongles einsetzbar, auf denen geheimes Schlüsselmaterial gespeichert ist, um einen verschlüsselten Austausch von Nachrichten zu ermöglichen oder digitale Signaturen zur erzeugen oder wieder zu entschlüsseln.

Der Angreifer nutzt die vergleichsweise leichte Zugänglichkeit von Datenleitungen der entsprechenden Schaltungen aus, um physikalische Größen wie Strom, elektromagnetische Abstrahlung, Ergebnisse bei induzierten Fehlern oder Laufzeiten bestimmter Berechnungen zu messen. In unmittelbarer Auswertung der Messwerte anhand einer einfachen Stromanalyse (SPA) oder durch Aufzeichnung von Messwerten wie Strom mittels eines Speicheroszilloskops und anschließender statistischer Auswertung können auf effiziente Weise Informationen über den zugrunde liegenden Algorithmus oder auch einfach nur einen aktuell vorliegenden Schlüssel gewonnen werden.

Letzteres soll anhand eines Beispiels näher erläutert werden: ein Verfahren zur Verschlüsselung sieht sowohl für Algorithmen basierend auf elliptischen Kurven als auch für solche basierend auf dem RSA-Verfahren die Anwendung einer mathematischen Operation vor. Im Fall des RSA-Verfahrens ist eine modulare Exponentiation

$$z = a^k \bmod N$$

durchzuführen, wobei der Modul N sowie a natürliche Zahlen sind und k ein Schlüssel (privat oder öffentlich) oder zumindest eine aus diesem abgeleitete Größe ist. Im Fall elliptischer Kurven ist eine Skalarmultiplikation

$$Q = k * P$$

Als mathematische Operation durchzuführen, wobei P ein Punkt auf einer elliptischen Kurve über einen endlichen Körper K ist und k wieder ein Schlüssel oder eine aus diesem abgeleitete Größe ist.

Eine elliptische Kurve ist eine Nullstellenmenge einer quadratische Gleichung

$$y^2 + a_1 xy + a_3 y = x^3 + a_2 x^2 + a_4 x + a_6,$$

mit Koeffizienten $a_i$ in einem endlichen Körper. Die elliptische Kurve besitzt keine singulären Punkte und bildet unter Hinzunahme eines unendlich fernen Punktes als neutrales Element eine additive Gruppe, deren Gruppengesetz geometrisch interpretiert werden kann. Jede Gerade schneidet eine elliptische Kurve in drei nicht notwendig verschiedenen Punkten und zu je zwei Punkten kann ein dritter Punkt berechnet werden, so dass die Summe der drei Punkte das neutrale Element ist. Die Addition erfolgt (geometrisch veranschaulicht) durch Anlegen einer Gerade durch zwei Punkte P und Q, Ermitteln des dritten die elliptische Kurve schneidenden Punktes S und Spiegeln des Punktes an der x-Achse. Eine Skalarmultiplikation eines Punktes mit einem Skalar k wird durch k-faches Addieren eines Punktes zu sich selbst ermöglicht.

Kryptosysteme basierend auf elliptischen Kurven sind seit 1985 bekannt (eingeführt durch Koblitz, N. und Miller, V.). Dieses und das ältere RSA-Verfahren (Rivest, R., Shamir, A., Adleman, L.) sind beispielsweise in Menezes, van Oorschot, Vanstone "Handbook of Applied Cryptography", CRC Press (1996) eingehend beschrieben. Im Gegensatz zu den elliptischen Kurven wird in RSA-Systemen in multiplikativen Halbgruppen gerechnet. Das Analogon der Addition gemäß den elliptischen Kurven ist dabei die Multiplikation im RSA-System. Aus der Skalarmultiplikation wird hier eine Exponentiation.

Zu dem zu erläuternden Beispiel zurückkehrend lässt sich feststellen, dass eine rechentechnische Umsetzung der mathematischen Operation durch folgenden Algorithmus stattfinden kann, wobei der k durch eine binäre Darstellung ($b_i$, i=n-1...0) vorgegeben ist:

## Algorithmus 1a: (RSA: $z = a^k \bmod N$)

(1) $z \leftarrow 1$
(2) $i \leftarrow n-1$
(3) solange $i > -1$
(3.1) $z \leftarrow z^2 \bmod N$
(3.2) falls $b_i = 1$ dann $z \leftarrow z * a \bmod N$
(3.3) $i \leftarrow i - 1$
(4) liefere z

## Algorithmus 1b: (EC – elliptische Kurve: $Q = k * P$)

(1) $Q \leftarrow 0$
(2) $i \leftarrow n-1$
(3) solange $i > -1$
(3.1) $Q \leftarrow 2 * Q$
(3.2) falls $b_i = 1$ dann $Q \leftarrow Q + P$
(3.3) $i \leftarrow i - 1$
(4) liefere Q

Es werden somit im Wesentlichen jeweils zwei Rechenoperationen in jedem Schleifendurchlauf durchgeführt, ein so genanntes Square-and-Multiply beim RSA-System und ein so genanntes Double-and-Add beim EC-System (EC soll im Folgenden als Abkürzung für elliptische Kurven verwendet werden).

Im Fall einer einfachen Stromanalyse (SPA) wird das Profil des Stromverbrauchs einer Exponentiation bzw. einer Skalarmultiplikation analysiert. Die Skalarmultiplikation z.B. besteht hauptsächlich aus Additionen und Verdopplungen. Die Operationen unterscheiden sich erheblich in der Zahl der Elementaroperationen in K, so dass auch der Stromverbrauch unterschiedlich ist. Es kann daher durch einen entsprechenden Seitenkanalangriff auf die einzelnen Bits und damit die binäre Darstellung von k selbst rückgeschlossen werden.

Ein erster Schritt zur Abwehr solcher Angriffe besteht darin, die vom Wert eines jeweiligen Bits abhängigen Stromflüsse und Rechenlaufzeiten für beide möglichen Bit-Zustände 0 und 1 anzugleichen, wie im Folgenden gezeigt ist:

## Algorithmus 2a: (RSA: $z = a^k \bmod N$)

(1) $z_0 \leftarrow 1$
(2) $i \leftarrow n-1$
(3) solange $i > -1$
(3.1) $z_0 \leftarrow z_0^2 \bmod N$
(3.2) $z_1 \leftarrow z_0 * a \bmod N$
(3.3) $z_0 \leftarrow z_{b_i}$ mit $b_i = 0$ oder 1
(3.4) $i \leftarrow i - 1$
(4) liefere $z_0$

## Algorithmus 2b: (EC – elliptische Kurve: $Q = k * P$)

(1) $Q_0 \leftarrow 0$
(2) $i \leftarrow n-1$
(3) solange $i > -1$
(3.1) $Q_0 \leftarrow 2 * Q_0$

(3.2) $Q_1 \leftarrow Q_0 + P$

(3.3) $Q_0 \leftarrow Q_{bi}$ mit $b_i$ = 0 oder 1

(3.4) $i \leftarrow i - 1$

(4) liefere $Q_0$

Es werden nunmehr in jedem Fall unabhängig vom Wert des jeweiligen Bits $b_i$ die erste Rechenoperation (Schritt 3.1) wie nunmehr auch die zweite Rechenoperation ausgeführt (Schritt 3.2). Allerdings steigt die Laufzeit hier nicht unerheblich an, weil mehr Operationen durchzuführen sind.

Der Wert des Bits selbst geht allein in die Zuweisung in Schritt (3.3) ein. Ist $b_i$ = 0, so wird der Punkt $Q_0$ (Fall EC) in diesem Schleifendurchlauf allein durch sich selbst aktualisiert. Anders ausgedrückt: der in Schritt (3.2) berechnete Wert zu $Q_1$ bleibt dann außer acht, er wurde "umsonst" im Sinne der Verwertung seines Ergebnisses berechnet. Ist dagegen bi = 1, so wird $Q_0$ der Wert $Q_1$ zugewiesen. Anhand der nunmehr zwei Hilfsgrößen $W_0$, $Q_1$ wird dadurch jedenfalls zumindest eine Angleichung in Stromverbrauch und Rechenzeit erreicht.

Dies ist allerdings nicht vollständig, wie sich gezeigt hat. Schritt (3.3) impliziert nämlich ähnlich wie eine if/else-Abfrage ("falls") einen Sprung zu Adressen. Je nach Adresse kann auch hier ein unterschiedlicher Stromverbrauch merkbar werden, so dass ein Seitenkanalangriff möglich wird.

Eine alternative Methode zur Abwehr von Seitenkanalangriffen besteht in der so genannten Montgomery-Leiter. Dieser Algorithmus ist im Falle elliptischer Kurven besonders effizient, jedoch ist aus Druckschrift DE 10151129 A1 auch eine Anwendung auf RSA-Systeme bekannt. Bei der Berechnung der Skalarmultiplikation kann nämlich auf Mitberechnung der y-Koordinate verzichtet werden, wenn jeweils das Produkt aus dem Punkt auf der elliptischen Kurve mit einem Faktor k und gleichzeitig mit einem Faktor k+1 ausgerechnet wird. Die y-Koordinate lässt sich im Fall elliptischer Kurven aus beiden Teilergebnissen rekonstruieren.

Die Berechnung gleichzeitig beider Ergebnisse der Multiplikationen wird dem Algorithmus zufolge vorteilhaft in einem gemeinsamen Schema integriert, wobei die dazu definierten Hilfsgrößen (hier R und S genannt) sich in jedem Schleifendurchlauf effizient mit gegenseitiger Hilfe aktualisieren:

## Algorithmus 3: (EC - elliptische Kurve: Q = k * P)

Montgomery-Leiter:

(1) $R \leftarrow P$, $S \leftarrow 0$

(2) $i \leftarrow n-1$

(3) solange $i > -1$

(3.1) falls $b_i$ = 1 { $S \leftarrow S + R$, $R \leftarrow 2 * R$ }

(3.2) sonst { $R \leftarrow R + S$, $S \leftarrow 2 * S$ }

(3.3) $i \leftarrow i - 1$

(4) liefere R, S

(5) rekonstruiere $k * P$ aus den Punkten R, S und P

In dem gezeigten Beispiel läuft in jedem Schleifendurchlauf die Hilfsgröße R bzw. der Punkt R um 1 * P der Hilfsgröße bzw. dem Punkt S voraus. P wurde vorgegeben. Für $k = (1010) = 10$ ist beispielsweise $S = 10 * P$ und $R = 11 * P$. Die Addition und die Verdopplung laufen bitunabhängig völlig gleichförmig ab. Von Seiten der Reihenfolge der Operationen lassen sich keine Rückschlüsse auf die Bitfolge ziehen. Jedoch bildet die Sprunganweisung ("falls" bzw. "sonst") wie eingangs erwähnt einen Schwachpunkt für einen Angriff.

Aus CHEVALLIER-MAMES B: "Self-randomized exponentiation algorithms" ist ein Algorithmus bekannt, bei dem asymmetrische Kryptografieverfahren durch eine so genannte "Self-Randomized Exponentiation" vor Seitenkanalangriffen geschützt werden.

Der Exponent D wird dabei als zusätzliche Zufallsquelle während des Exponentierens betrachtet. Das Verfahren lässt sich auf RSA und Elliptische Kurven-Algorithmen anwenden und wird in einer Ausführung ohne Verzweigungen implementiert.

Dokument XP055155620 : A Practical Countermeasure against Address-Bit Differential Power Analysis from Kouichi Itohs, Tetsuya Izu, and Masahiko Takenakas beschreibt eine praktische Gegenmassnahme gegen Addrese-Bit DPA, die zufällig Addresierung Gegenmassnahme, die mit oder ohne vorberechnete Tabellen auf RSA oder ECC Exponenten angewandt wird. Diese Gegenmassnahme hat fast keinen Mehraufwand für den Schutz, nämlich die Rechengeschwindigkeit ist nicht geringer als jene ohne Gegenmassnahme.

Es ist daher die Aufgabe der Erfindung ein in Bezug auf Sicherheit gegenüber Seitenkanalangriffen verbessertes Verfahren zur Ver- oder Entschlüsselung beziehungsweise zum Erzeugen oder Verifizieren einer digitalen Signatur von Nachrichten anzubieten.

Die Aufgabe wird gelöst durch ein Verfahren zum sicheren Ver- oder Entschlüsseln einer Nachricht oder zum Erzeugen oder Verifizieren einer digitalen Signatur einer Nachricht mit den Merkmalen gemäß den unabhängigen Ansprüchen 1 und 9. Vorteilhafte Ausgestaltungen sind den abhängigen Ansprüchen zu entnehmen.

Die in den unabhängigen Ansprüchen angegeben Verfahren richten sich auf die beispielsweise in den Algorithmen 2 und 3 gezeigten Grundzüge, wobei ein die Aspekte verbindender Gedanke in der Vermeidung von im Stromprofil messbaren Sprunganweisungen liegt.

Es wird vorgeschlagen, die Speicheradressen der Hilfsgrößen, mit denen die Rechenoperationen bei der Exponentiation oder der Skalarmultiplikation ausgeführt werden, zu bestimmen und mit diesen selbst Operationen auszuführen. Es ist dabei vorgesehen, die Differenz der Speicheradressen - jeweils ausgedrückt als Zahlen beziehungsweise abgebildet in den Zahlenbereich - zu berechnen. Wird vom aktuellen Schlüsselbit abhängig die berechnete Differenz zu einer Speicheradresse hinzuaddiert, wenn diese den kleineren Wert hatte, oder subtrahiert, wenn diese den größeren Wert hatte, so erhält man gerade die Speicheradresse der jeweils anderen Hilfsgröße (R oder S bzw. $z_0$ oder $z_1$). Es kann daher durch eine solche Berechnung ein Tausch der Werte beider Hilfsgrößen oder eine Abbildung einer der beiden Hilfsgrößen auf die jeweils andere erzielt werden.

Der Tausch der Werte der Hilfsgrößen ist vorteilhaft bei der Montgomery-Leiter: für beide bitabhängigen Verzweigungspfade erfolgen nämlich identische Rechenoperationen, jedoch in symmetrisch ausgetauschter Anordnung der Hilfsgrößen.

Die Berechnung kann beispielsweise im Rahmen einer Multiplikation des Bitwertes mit der vorher berechneten Differenz der Speicheradresswerte erfolgen. Ist der Bitwert 0, so wird nachfolgend auch keine Änderung bei der Addition oder Subtraktion der Speicheradressen eintreten. Beträgt der Bitwert dagegen 1, so wird die Differenz identisch abgezogen oder hinzugezählt.

Ein Aspekt sieht vor, den Bitwert an das Ende eines Rechnerwortes zu bringen, d.h. es zum geringstsignifikanten Bit (LSB) zu machen. Eine anschließende Multiplikation des Rechnerwortes mit der Differenz liefert ein Produkt das zunächst zu einer Speicheradresse hinzuaddiert werden kann. Löscht man nun das Bit (LSB) zum Wert 0, multipliziert erneut und subtrahiert das Produkt wieder, so erhält man die ursprüngliche Adresse, wenn das Bit LSB anfangs 0 war, sich also durch den Löschvorgang nichts geändert hat. Hatte es jedoch den Wert 1, so gelangt man um genau die Differenz in dem Adressbereich weiter zu der Speicheradresse der anderen bei der mathematischen Operation verwendeten Hilfsgröße.

Die wesentlichen Schritte der Erfindung sind die Differenzbildung der Adressen und die vom aktuellen Wert des Bits abhängige Addition oder Subtraktion der Differenz von einer der Speicheradressen bitabhängig um zur jeweils anderen zu gelangen. Die Sprunganweisung entfällt daher, welches sich besonders bei der Montgomery-Leiter vorteilhaft bemerkbar macht. Die in Abhängigkeit vom Bitwert auszuführenden Rechenoperationen lagen bisher an verschiedenen Positionen im Programmablauf. Dagegen kann nunmehr aufgrund des symmetrischen Charakters der Hilfsgrößen in den Programmanweisungen auf die gleichen Rechenoperationen zugegriffen werden, wobei nur die Inhalte symmetrisch ausgetauscht werden. Wie die Sprunganweisung entfällt, ist eine Detektion der unterschiedlichen Stromaufnahme in Abhängigkeit vom Bitwert oder eine entsprechend unterschiedliche Rechenzeit kaum mehr möglich, so dass die Sicherheit gegenüber einem Seitenkanalangriff erhöht ist.

Die Erfindung soll nun anhand von Ausführungsbeispielen näher erläutert werden.

Es wird ausgehend von dem in Algorithmus 3 gezeigten Ablauf einer Montgomery-Leiter gemäß dem Stand der Technik ein SPAsicherer Algorithmus entwickelt: Die Schritte

(3.1) falls $b_i = 1$: { $S \leftarrow S + R$, $R \leftarrow 2 * R$ }

(3.2) sonst { $R \leftarrow R + S$, $S \leftarrow 2 * S$ } lassen sich mit

$$F1 = \{ \; S \leftarrow S + R, \; R \leftarrow 2 * R \; \}$$

und

$$F2 = \{ \; R \leftarrow R + S, \; S \leftarrow 2 * S \; \}$$

vereinfacht ausdrücken:
falls $b_i = 1$: F1, sonst F2.

Gelangt man zu der der Erfindung zugrunde liegenden Erkenntnis, dass Sprunganweisungen ein Schwachpunkt gegenüber Seitenkanalangriffen darstellen, so besteht ein nächster Schritt darin, die Hilfsgrößen am Beginn und am Ende eines Schleifendurchlaufs zu tauschen, wenn das Schlüsselbit den Wert 0 annimmt. Es braucht dann nur noch auf eine der beiden Sprungadressen verwiesen zu werden, etwa F1:

(3.1) falls $b_i$ = 1: F1
(3.2) sonst { tausche (R,S), F1, tausche (R,S) }. An diesem Punkt ist die Detektierbarkeit durch Seitenkanalangriffe wieder beträchtlich erhöht, denn abhängig vom Bitwert werden beim Umkopieren zwei Speicherzugriffe pro Rechnerwort erforderlich. Bei längeren Körperelementen werden viele Zugriffe erforderlich, welches sich signifikant in der Stromaufnahme niederschlägt, wenn das Schlüsselbit aktuell nicht gesetzt ist, also 0 beträgt.

Eine Angleichung kann wie im folgenden Algorithmus aufgezeigt erfolgen:

## Algorithmus 4: (EC – elliptische Kurve:  Q = k * P)

Montgomery-Leiter:

(1) R ← P, S ← 0
(2) i ← n-1
(3) solange i > -1
(3.1) falls $b_i$ = 1 { r ← Adresse(R), s ← Adresse (S) }
(3.2) sonst { r ← Adresse(S), s ← Adresse(R) }
(3.3) lade Inhalt s nach S', lade Inhalt r nach R'
(3.4) S' ← S' + R'
(3.5) R' ← 2' * R'
(3.6) speichere S' nach s, speichere R' nach r
(3.7) i ← i - 1
(4) liefere R, S
(5) rekonstruiere k * P aus den Punkten R, S und P.

r und s sind dabei Adressvariablen und bewirken die Vertauschung der Hilfsgrößen in Abhängigkeit vom Wert des Bits. r zeigt auf die Adresse der Hilfsgröße bzw. den Punkt R, wenn $b_i$ = 1 und auf den Punkt S, wenn $b_i$ = 0 ist.
Eine Vermeidung der Sprunganweisung in (3.1) gelingt erfindungsgemäß, indem zwischen den Adressvariablen r und s die Differenz gebildet und diese mit einem Rechnerwort h multipliziert wird, in dem die Bitabhängigkeit hinterlegt ist. Es sei vorliegend angenommen, dass Adresse(S) größer als die Adresse(R) ist. Weiter liegt das Skalar k in einem Feld von Rechnerworten vor.

## Algorithmus 5: (EC – elliptische Kurve:  Q = k * P)

Montgomery-Leiter:

(1) R ← P, S ← 0
(2) d ← Adresse(S) - Adresse(R)
(3) i ← n-1
(4) solange i > -1
(4.1) Rotiere $b_i$ zyklisch auf das LSB des Rechnerwortes
(4.2) Kopiere h nach h', lösche das LSB von h'
(4.3) r ← Adresse(S), s ← Adresse(R)
(4.4) m ← h * d
(4.5) r ← r - m, s ← s + m
(4.6) m ← h' * d
(4.7) r ← r + m, s ← s - m
(4.8) lade Inhalt s nach S', lade Inhalt r nach R'
(4.9) S' ← S' + R'
(4.10) R' ← 2' * R'

(4.11) speichere S' nach s, speichere R' nach r

(4.12) i ← i - 1

(5) liefere R, S

(6) rekonstruiere k * P aus den Punkten R, S und P.

Die Rechnerworte h und h' unterscheiden sich zahlenmäßig maximal um den Wert 1, weil sie nur im LSB verschieden sein können. Ist $b_i = 1$, so wird r in den Schritten (4.4) bis (4.7) von Adresse(S) auf die Adresse(R) gesenkt. Dies entspricht dem Ergebnis nach Schritt (3.1) aus Algorithmus 4, jedoch war hier keine Sprunganweisung erforderlich. Es erfolgte lediglich eine echte Multiplikation von Skalaren (Schritte 4.4) bzw. (4.6)).

Eine Anwendung der Erfindung auf ein RSA-Verfahren wie in Algorithmus 2a gemäß dem Stand der Technik vorliegt zeigt folgender Ablauf:

## Algorithmus 6: (RSA: $z = a^k \bmod N$)

(1) $z_0 \leftarrow 1$

(2) $d \leftarrow$ Adresse($z_0$) - Adresse ($z_1$)

(3) $i \leftarrow n-1$

(4) solange $i > -1$

(4.1) $z_0 \leftarrow z_0^2 \bmod N$

(4.2) $z_1 \leftarrow z_0 * a \bmod N$

(4.3) Rotiere $b_i$ zyklisch auf das LSB des Rechnerwortes

(4.4) Kopiere h nach h', lösche das LSB von h'

(4.5) $r \leftarrow$ Adresse($z_0$)

(4.6) $m \leftarrow h * d$

(4.5) $r \leftarrow r - m$

(4.6) $m \leftarrow h' * d$

(4.7) $r \leftarrow r + m$

(4.8) speichere Inhalt r nach $z_0$

(4.9) $i \leftarrow i - 1$

(5) liefere $z_0$

Im Gegensatz zur Montgomery-Leiter für elliptische Kurven muss in diesem Algorithmus nur eine Adresse berechnet werden. Es ist nur ein Zwischenwert zu speichern.

## Patentansprüche

1. Verfahren zum sicheren Ver- oder Entschlüsseln einer Nachricht oder zum Erzeugen oder Verifizieren einer digitalen Signatur einer Nachricht, bei dem prozessorgestützt eine mathematische Operation mit einem Schlüssel k auf die Nachricht angewendet wird, der als binäre Zahl mit einer Sequenz von Bits $b_i$ darstellbar ist, umfassend die Schritte:

   - Initialisieren einer ersten Hilfsgröße (z0 und einer zweiten Hilfsgröße z1;
   - Ermitteln jeweils einer Speicheradresse für die erste z0 und die zweite Hilfsgröße z1 und Zuordnen der ersten Speicheradresse zu einer Adressvariablen r;
   - Berechnen eines Differenzwerts d aus dem Unterschied zwischen den Speicheradressen;
   - sequentiell für jedes Bit $b_i$ beginnend vom meistsignifikanten Bit MSB Durchführen der folgenden Schritte:

      (a) Aktualisieren der ersten Hilfsgröße z0 durch Anwenden einer ersten Rechenoperation auf die erste Hilfsgröße z0;
      (b) Aktualisieren der zweiten Hilfsgröße z1 durch Anwenden einer zweiten Rechenoperation auf die erste Hilfsgröße z0;
      (c) Hinzufügen des berechneten Differenzwerts d zu der Adressvariablen r in Abhängigkeit von dem Wert des aktuellen Bits $b_i$, so dass der Adressvariablen r entweder die Speicheradresse der ersten Hilfsgröße z0 oder die Speicheradresse der zweiten Hilfsgröße z1 als Wert zugeordnet ist;
      (d) Aktualisieren der ersten Hilfsgröße z0 durch Übertragen des Wertes derjenigen Hilfsgröße z0, z1, deren Speicheradresse der Adressvariablen r zugeordnet ist;

Nach Beendigung der Schritte für jedes der Bits $b_i$ Ausgabe der ersten Hilfsvariablen z0 als Ergebnis der mathematischen Operation,

wobei im Schritt (c.) der Differenzwert d zu der Adressvariablen r in Abhängigkeit von dem Wert des aktuellen Bits $b_i$ hinzugefügt wird, indem

- ein erstes Rechnerwort h1 gebildet wird, bei dem das aktuelle Bit $b_i$ in der sequentiellen Verarbeitung das geringstsignifikante Bit LSB ist;
- das erste Rechnerwort h1 mit der Differenz zu einem ersten Produkt m multipliziert wird;
- das erste Produkt m1 von der Adressvariablen r subtrahiert wird;
- aus dem ersten Rechnerwort h1 ein zweites Rechnerwort h2 gebildet wird, indem das geringstsignifikante Bit LSB auf Null gesetzt wird;
- das zweite Rechnerwort h2 mit der Differenz d zu einem zweiten Produkt m2 multipliziert wird;
- das zweite Produkt m2 zu der Adressvariablen r hinzuaddiert wird.

**2.** Verfahren nach Anspruch 1, bei dem
der ersten Hilfsgröße z0 ein Wert 1 bei der Initialisierung zugewiesen wird, und die erste Rechenoperation eine Quadratur oder Multiplikation der ersten Hilfsgröße z0 mit sich selbst beinhaltet.

**3.** Verfahren nach Anspruch 2, bei dem
eine feste Basis a vorgegeben wird und die zweite Rechenoperation eine Multiplikation der ersten Hilfsgröße z0 mit der Basis a beinhaltet.

**4.** Verfahren nach Anspruch 3, bei dem
eine Zahl N vorgegeben wird, die für eine Moduloperation bei den Rechenoperationen verwendet wird.

**5.** Verfahren nach Anspruch 4, bei dem
es sich um einen RSA - Ver-/Entschlüsselungs- oder Signaturverfahren handelt, wobei die mathematische Operation eine modulare Exponentiation $a^k$ mod N ist, und wobei die vorgegebene Zahl N für die Moduloperation das Produkt zweier großer Primzahlen p*q ist.

**6.** Verfahren nach Anspruch 1, bei dem

- die erste Hilfsgröße z0 einen Punkt $Q_0$ auf einer elliptischen Kurve E über einen endlichen Körper K repräsentiert und beim Schritt der Initialisierung den Wert 0 zugewiesen bekommt,
- beim Schritt der Aktualisierung der ersten Hilfsgröße z0 die erste Rechenoperation eine skalare Multiplikation des Punktes $Q_0$ mit dem Faktor 2 beinhaltet,
- die mathematische Operation eine Skalarmultiplikation k*P beinhaltet.

**7.** Verfahren nach Anspruch 6, bei dem
im Schritt der Aktualisierung der zweiten Hilfsgröße z1 die zweite Rechenoperation eine Addition des Punktes $Q_0$ mit einem fest vorgegebenen Punkt P auf der elliptischen Kurve E beinhaltet.

**8.** Verfahren zum sicheren Ver- oder Entschlüsseln einer Nachricht oder zum Erzeugen oder Verifizieren einer digitalen Signatur einer Nachricht, bei dem prozessorgestützt eine mathematische Operation mit einem Schlüssel auf die Nachricht angewendet wird, der als binäre Zahl mit einer Sequenz von Bits $b_i$ darstellbar ist, umfassend die Schritte:

- Initialisieren einer ersten R und einer zweiten Hilfsgröße S;
- Ermitteln jeweils einer Speicheradresse für die erste R und die zweite Hilfsgröße S;
- Zuordnen der ersten Speicheradresse zu einer ersten Adressvariablen r und der zweiten Speicheradresse zu einer zweiten Adressvariablen S;
- Berechnen eines Differenzwerts d aus dem Unterschied zwischen den Speicheradressen;
- sequentiell für jedes Bit $b_i$ Durchführen der folgenden Schritte:

  (a) Hinzufügen des berechneten Differenzwerts d zu der ersten Adressvariablen r und Subtrahieren des Differenzwerts (d) von der zweiten Adressvariablen s in Abhängigkeit von dem Wert des Bits $b_i$, so dass

  • entweder der ersten Adressvariablen r die Speicheradresse der ersten Hilfsgröße R und der zweiten Adressvariablen s die Speicheradresse der zweiten Hilfsgröße S als Wert zugeordnet ist,
• oder der ersten Adressvariablen r die Speicheradresse der zweiten Hilfsgröße S und der zweiten Adressvariablen S die Speicheradresse der ersten Hilfsgröße R als Wert zugeordnet ist;

(b) Aktualisieren derjenigen Hilfsgröße R, S, die der ersten Adressvariablen r zugeordnet ist, durch Anwenden einer ersten Rechenoperation;
(c) Aktualisieren derjenigen Hilfsgröße R, S, die der zweiten Adressvariablen s zugeordnet ist, durch Anwenden einer zweiten Rechenoperation;

- Nach Beendigung der Schritte für jedes der Bits $b_i$ Ausgabe der ersten R und zweiten Hilfsgrößen S und Berechnen eines Ergebnisses der mathematischen Operation aus der ersten (R) und der zweiten Hilfsgröße S,

wobei im Schritt a der Differenzwert d zu der ersten Adressvariablen r in Abhängigkeit von dem Wert des aktuellen Bits $b_i$ hinzugefügt wird, indem

- ein erstes Rechnerwort h1 gebildet wird, bei dem das aktuelle Bit $b_i$ in der sequentiellen Verarbeitung das geringstsignifikante Bit LSB ist;
- das erste Rechnerwort (h1) mit der Differenz zu einem ersten Produkt m1 multipliziert wird;
- das erste Produkt m1 von der Adressvariablen r subtrahiert wird;
- aus dem ersten Rechnerwort h1 ein zweites Rechnerwort h2 gebildet wird, indem das geringstsignifikante Bit LSB auf Null gesetzt wird;
- das zweite Rechnerwort h2 mit der Differenz d zu einem zweiten Produkt m2 multipliziert wird;
- das zweite Produkt m2 zu der Adressvariablen r hinzuaddiert wird.

9. Verfahren nach Anspruch 8, bei dem
die erste Hilfsgröße R einen Punkt auf einer elliptischen Kurve E über einen endlichen Körper K repräsentiert und beim Schritt der Initialisierung einen festen Punkt P zugewiesen bekommt.

10. Verfahren nach Anspruch 8 oder 9, bei dem
die zweite Hilfsgröße S einen Punkt auf einer elliptischen Kurve E über einen endlichen Körper K repräsentiert und beim Schritt der Initialisierung einen Wert 0 zugewiesen bekommt.

11. Verfahren nach einem der Ansprüche 8 bis 10, bei dem die mathematische Operation eine Skalarmultiplikation k*P beinhaltet.

12. Verfahren nach einem der Ansprüche 8 bis 11, bei dem die erste Rechenoperation im Schritt Aktualisieren der der ersten Adressvariablen zugeordneten Hilfsgröße eine Addition zweier Punkte auf einer elliptischen Kurve umfasst.

13. Verfahren nach einem der Ansprüche 8 bis 12, bei dem die zweite Rechenoperation im Schritt Aktualisieren der der zweiten Adressvariablen zugeordneten Hilfsgröße eine skalare Multiplikation eines Punkte auf einer elliptischen Kurve mit einem Faktor 2 beziehungsweise die Addition mit sich selbst umfasst.

14. Verfahren nach Anspruch 8, bei dem
es sich um einen RSA - Ver-/Entschlüsselungs- oder Signaturverfahren handelt, wobei die mathematische Operation eine modulare Exponentiation $a^k$ mod N mit einer vorgegebenen Zahl N für die Moduloperation ist, welche das Produkt zweier großer Primzahlen p*q ist.

15. Verfahren nach einem der Ansprüche 8 bis 14, bei dem im Schritt (a) der Differenzwert d von der zweiten Adressvariablen s in Abhängigkeit von dem Wert des aktuellen Bits $b_i$ subtrahiert wird, indem

- das erste Produkt m1 zu der Adressvariablen r hinzuaddiert wird;
- das zweite Produkt m2 von der Adressvariablen s subtrahiert wird.

**Claims**

1. Method for securely encrypting or decrypting a message or for generating or verifying a digital signature of a message, wherein a mathematical operation is applied to the message with the aid of a processor using a key k, which can be represented as a binary number with a sequence of bits $b_i$, comprising the steps:

- Initializing a first auxiliary variable z0 and a second auxiliary variable z1;
- Determining a memory address respectively for the first z0 and second auxiliary variable z1 and assigning the first memory address to an address variable r;
- Calculating a differential value d from the difference between the memory addresses;
- Implementing the following steps sequentially for each bit $b_i$ starting from the most significant bit MSB:

(a) Updating the first auxiliary variable z0 by applying a first computation operation to the first auxiliary variable z0;
(b) Updating the second auxiliary variable z1 by applying a second computation operation to the first auxiliary variable z0;
(c) Adding the calculated differential value d to the address variable r as a function of the value of the current bit $b_i$, so that either the memory address of the first auxiliary variable z0 or the memory address of the second auxiliary variable z1 is assigned as a value to the address variable r;
(d) Updating the first auxiliary variable z0 by transmitting the value of the auxiliary variable z0, z1, whose memory address is assigned to the address variable r;

- After completing the steps for each of the bits $b_i$, outputting the first auxiliary variable z0 as the result of the mathematical operation,

wherein in step (c) the differential value d is added to the address variable r as a function of the value of the current bit $b_i$ by

- a first computer word h1 being formed, wherein the current bit $b_i$ is the least significant bit LSB in the sequential processing;
- the first computer word h1 being multiplied by the difference to form a first product m;
- the first product m1 being subtracted from the address variable r;
- a second computer word h2 being formed from the first computer word h1, by setting the least significant bit LSB to zero;
- the second computer word h2 being multiplied by the difference d to form a second product m2;
- the second product m2 being added to the address variable r.

2. Method according to claim 1, wherein
during initialization a value 1 is assigned to the first auxiliary variable z0 and the first computation operation includes a squaring or multiplication of the first auxiliary variable z0 by itself.

3. Method according to claim 2, wherein
a fixed base a is predefined and the second computation operation includes a multiplication of the first auxiliary variable z0 by the base a.

4. Method according to claim 3, wherein
a number N is predefined, which is used for a modular operation during the computation operations.

5. Method according to claim 4, wherein
an RSA encryption/decryption or signature method is used, with the mathematical operation being a modular exponentiation $a^k \bmod N$ and with the predefined number N for the modular operation being the product of two large prime numbers p*q.

6. Method according to claim 1, wherein

- the first auxiliary variable z0 represents a point $Q_0$ on an elliptic curve E over a finite field K and is allocated the value 0 during the initialization step,
- during the step of updating the first auxiliary variable z0 the first computation operation includes a scalar multiplication of the point $Q_0$ by the factor 2,
- the mathematical operation includes a scalar multiplication k*P.

7. Method according to claim 6, wherein

in the step of updating the second auxiliary variable z1 the second computation operation includes an addition of the point $Q_0$ and a permanently predefined point P on the elliptic curve E.

8. Method for securely encrypting or decrypting a message or for generating or verifying a digital signature of a message, wherein a mathematical operation is applied to the message with the aid of a processor using a key, which can be represented as a binary number with a sequence of bits $b_i$, comprising the steps:

- Initializing a first R and a second auxiliary variable S;
- Determining a memory address respectively for the first R and second auxiliary variable S;
- Assigning the first memory address to a first address variable r and the second memory address to a second address variable s;
- Calculating a differential value d from the difference between the memory addresses;
- Implementing the following steps sequentially for each bit $b_i$:

(a) Adding the calculated differential value d to the first address variable r and subtracting the differential value d from the second address variable s as a function of the value of the bit $b_i$, so that

• either the memory address of the first auxiliary variable R is assigned as a value to the first address variable r and the memory address of the second auxiliary variable S is assigned as a value to the second address variable s,
• or the memory address of the second auxiliary variable S is assigned as a value to the first address variable r and the memory address of the first auxiliary variable R is assigned as a value to the second address variable s;

(b) Updating the auxiliary variable R, S, which is assigned to the first address variable r, by applying a first computation operation;
(c) Updating the auxiliary variable R, S, which is assigned to the second address variable s, by applying a second computation operation;

- After completing the steps for each of the bits $b_i$, outputting the first R and second auxiliary variables S and calculating a result of the mathematical operation from the first R and second auxiliary variables S,

wherein in step a the differential value d is added to the first address variable r as a function of the value of the current bit $b_i$, by

- a first computer word h1 being formed, wherein the current bit $b_i$ is the least significant bit LSB in the sequential processing;
- the first computer word h1 being multiplied by the difference to form a first product m1;
- the first product m1 being subtracted from the address variable r;
- a second computer word h2 being formed from the first computer word h1, by setting the least significant bit LSB to zero;
- the second computer word h2 being multiplied by the difference d to form a second product m2;
- the second product m2 being added to the address variable r.

9. Method according to claim 8, wherein
the first auxiliary variable R represents a point on an elliptic curve E over a finite field K and is allocated a fixed point P during the initialization step.

10. Method according to claim 8 or 9, wherein
the second auxiliary variable S represents a point on an elliptic curve E over a finite field K and is allocated a value 0 during the initialization step.

11. Method according to one of claims 8 to 10, wherein
the mathematical operation includes a scalar multiplication k*P.

12. Method according to one of claims 8 to 11, wherein the first computation operation in the step of updating the auxiliary variable assigned to the first address variable comprises an addition of two points on an elliptic curve.

**13.** Method according to one of claims 8 to 12, wherein the second computation operation in the step of updating the auxiliary variable assigned to the second address variable comprises a scalar multiplication of a point on an elliptic curve by a factor 2 or addition to itself.

**14.** Method according to claim 8, wherein
an RSA encryption/decryption or signature method is used, with the mathematical operation being a modular exponentiation $a^k \bmod N$ with a predefined number N for the modular operation, which is the product of two large prime numbers p*q.

**15.** Method according to one of claims 8 to 14, wherein
in step a the differential value d is subtracted from the second address variable s as a function of the value of the current bit ($b_i$), by

- the first product m1 being added to the address variable r;
- the second product m2 being subtracted fromthe address variable s.


**Revendications**

**1.** Procédé de cryptage ou de décryptage sécurisé d'un message ou de création ou de vérification d'une signature numérique d'un message, selon lequel est appliquée au message, de manière assistée par processeur, une opération mathématique avec une clé k qui peut être représentée en tant que nombre binaire avec une séquence de bits $b_i$, comprenant les étapes suivantes :

- initialisation d'une première grandeur auxiliaire z0 et d'une deuxième grandeur auxiliaire z1 ;
- détermination de respectivement une adresse de stockage de la première grandeur auxiliaire z0 et de la deuxième grandeur auxiliaire z1 et affectation de la première adresse de stockage à une variable d'adresse r ;
- calcul d'une valeur différentielle d à partir de la différence entre les adresses de stockage ;
- exécution des étapes suivantes séquentiellement pour chaque bit $b_i$ à partir du bit le plus significatif MSB :

  a) actualisation de la première grandeur auxiliaire z0 par application d'une première opération de calcul à la première grandeur auxiliaire z0 ;
  b) actualisation de la deuxième grandeur auxiliaire z1 par application d'une deuxième opération de calcul à la première grandeur auxiliaire z0 ;
  c) ajout de la valeur différentielle calculée d à la variable d'adresse r en fonction de la valeur du bit actuel $b_i$, de sorte qu'est affectée en tant que valeur, à la variable d'adresse r, soit l'adresse de stockage de la première grandeur auxiliaire z0, soit l'adresse de stockage de la deuxième grandeur auxiliaire z1 ;
  d) actualisation de la première grandeur auxiliaire z0 par transmission de la valeur de la grandeur auxiliaire z0, z1 dont l'adresse de stockage est affectée à la variable d'adresse r ;

  à la fin des étapes, pour chacun des bits $b_i$, production en sortie de la première variable auxiliaire z0 en tant que résultat de l'opération mathématique,
  à l'étape (c), la valeur différentielle d étant ajoutée à la variable d'adresse r en fonction de la valeur du bit actuel $b_i$ par
- formation d'un premier mot informatique h1 dans lequel le bit actuel $b_i$ est le bit le moins significatif LSB dans le traitement séquentiel ;
- multiplication du premier mot informatique h1 par la différence par rapport à un premier produit m ;
- soustraction du premier produit m1 de la variable d'adresse r ;
- formation d'un deuxième mot informatique h2 à partir du premier mot informatique h1 par forçage à zéro du bit le moins significatif LSB ;
- multiplication du deuxième mot informatique h2 par la différence d par rapport à un deuxième produit m2 ;
- addition du deuxième produit m2 à la variable d'adresse r.

**2.** Procédé selon la revendication 1, selon lequel une valeur 1 est affectée à la première grandeur auxiliaire z0 lors de l'initialisation et la première opération de calcul comporte une quadrature ou une multiplication de la première grandeur auxiliaire z0 par elle-même.

**3.** Procédé selon la revendication 2, selon lequel une base fixe a est donnée et la deuxième opération de calcul comporte une multiplication de la première grandeur auxiliaire z0 par la base a.

4. Procédé selon la revendication 3, selon lequel un nombre N est donné, lequel est utilisé pour une opération de module lors des opérations de calcul.

5. Procédé selon la revendication 4, selon lequel il s'agit d'un procédé de cryptage/décryptage RSA ou de signature, l'opération mathématique étant une exponentiation modulaire $a^k \bmod N$ et le nombre donné N pour l'opération de module étant le produit de deux grands nombres premiers p*q.

6. Procédé selon la revendication 1, selon lequel :

- la première grandeur auxiliaire z0 représente un point $Q_0$ sur une courbe elliptique E sur un corps fini K et se voit affecter la valeur 0 à l'étape d'initialisation ;
- à l'étape d'actualisation de la première grandeur auxiliaire z0, la première opération de calcul comporte une multiplication scalaire du point $Q_0$ par le facteur 2 ;
- l'opération mathématique comporte une multiplication scalaire k*P.

7. Procédé selon la revendication 6, selon lequel la deuxième opération de calcul comporte, à l'étape d'actualisation de la deuxième grandeur auxiliaire z1, une addition du point $Q_0$ et d'un point fixe donné P sur la courbe elliptique E.

8. Procédé de cryptage ou de décryptage sécurisé d'un message ou de création ou de vérification d'une signature numérique d'un message, selon lequel est appliquée au message, de manière assistée par processeur, une opération mathématique avec une clé qui peut être représentée en tant que nombre binaire avec une séquence de bits $b_i$, comprenant les étapes suivantes :

- initialisation d'une première grandeur auxiliaire R et d'une deuxième grandeur auxiliaire S ;
- détermination respectivement d'une adresse de stockage de la première grandeur auxiliaire R et de la deuxième grandeur auxiliaire S ;
- affectation de la première adresse de stockage à une variable d'adresse r et de la deuxième adresse de stockage à une deuxième variable d'adresse s ;
- calcul d'une valeur différentielle d à partir de la différence entre les adresses de stockage ;
- exécution des étapes suivantes séquentiellement pour chaque bit $b_i$ :

(a) ajout de la valeur différentielle calculée d à la première variable d'adresse r et soustraction de la valeur différentielle d de la deuxième variable d'adresse s en fonction de la valeur du bit $b_i$, de sorte que

• soit l'adresse de stockage de la première grandeur auxiliaire R est affectée à la première variable d'adresse r et l'adresse de stockage de la deuxième grandeur auxiliaire S est affectée en tant que valeur à la deuxième variable d'adresse s ou
• l'adresse de stockage de la deuxième grandeur auxiliaire S est affectée en tant que valeur à la première variable d'adresse r et l'adresse de stockage de la première grandeur auxiliaire R est affectée en tant que valeur à la deuxième variable d'adresse s ;

(b) actualisation de la grandeur auxiliaire R, S qui est affectée à la première variable d'adresse r par application d'une première opération de calcul ;
(c) actualisation de la grandeur auxiliaire R, S qui est affectée à la deuxième variable d'adresse s par application d'une deuxième opération de calcul ;

- à la fin des étapes, pour chacun des bits $b_i$, production en sortie de la première grandeur auxiliaire R et de la deuxième grandeur auxiliaire S et calcul d'un résultat de l'opération mathématique à partir de la première grandeur auxiliaire (R) et de la deuxième grandeur auxiliaire (S),

à l'étape a, la valeur différentielle d étant ajoutée à la première variable d'adresse r en fonction de la valeur du bit actuel $b_i$ par

- formation d'un premier mot informatique h1 dans lequel le bit actuel $b_i$ est le bit le moins significatif LSB dans le traitement séquentiel ;
- multiplication du premier mot informatique (h1) par la différence par rapport à un premier produit m1 ;

- soustraction du premier produit m1 de la variable d'adresse r ;
- formation d'un deuxième mot informatique h2 à partir du premier mot informatique h1 par forçage à zéro du bit le moins significatif LSB ;
- multiplication du deuxième mot informatique h2 par la différence d par rapport à un deuxième produit m2 ;
- addition du deuxième produit m2 à la variable d'adresse r.

9. Procédé selon la revendication 8, selon lequel la première grandeur auxiliaire R représente un point sur une courbe elliptique E sur un corps fini K et se voit affecter un point fixe P à l'étape d'initialisation.

10. Procédé selon la revendication 8 ou 9, selon lequel la deuxième grandeur auxiliaire S représente un point sur une courbe elliptique E sur un corps fini K et se voit affecter une valeur 0 à l'étape d'initialisation.

11. Procédé selon l'une des revendications 8 à 10, selon lequel l'opération mathématique comporte une multiplication scalaire k*P.

12. Procédé selon l'une des revendications 8 à 11, selon lequel la première opération de calcul comprend, à l'étape d'actualisation de la grandeur auxiliaire affectée à la première variable d'adresse, une addition de deux points sur une courbe elliptique.

13. Procédé selon l'une des revendications 8 à 12, selon lequel la deuxième opération de calcul comprend, à l'étape d'actualisation de la grandeur auxiliaire affectée à la deuxième variable d'adresse, une multiplication scalaire d'un point de la courbe elliptique par un facteur 2 respectivement l'addition avec elle-même.

14. Procédé selon la revendication 8, selon lequel il s'agit d'un procédé de cryptage/décryptage RSA ou de signature, l'opération mathématique étant une exponentiation modulaire $a^k \bmod N$ avec un nombre donné N pour l'opération de module qui est le produit de deux grands nombres premiers p*q.

15. Procédé selon l'une des revendications 8 à 14, selon lequel à l'étape (a) la valeur différentielle d est soustraite de la deuxième variable d'adresse s en fonction de la valeur du bit actuel $b_i$ par :

- addition du premier produit m1 à la variable d'adresse r ;
- soustraction du deuxième produit m2 de la variable d'adresse s.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10151129 A1

**In der Beschreibung aufgeführte Nicht-Patentliteratur**

- **RIVEST, R. ; SHAMIR, A. ; ADLEMAN, L.** Handbook of Applied Cryptography. CRC Press, 1996